# EUROPEAN PATENT SPECIFICATION

(11) **EP 1 214 889 B1**
(45) Date of publication and mention of the grant of the patent: **09.06.2004**
(21) Application number: 00126591.7
(22) Date of filing: 13.12.2000
(51) Int. Cl.: A23G 3/00, A23G 3/02

(54) **Confectionery product provided with graphic representations, mold and and method of manufacture**
Konditorwaren mit grafischen Darstellungen, Hertstellungs-Form und -Verfahren
Article de confiserie pourvu de représentations graphiques, moule et méthode de fabrication

(43) Date of publication of application: 19.06.2002
(73) Proprietor: Tischler, Michael, Dr., 79650 Schopfheim (DE)
(72) Inventor: Tischler, Michael, Dr., 79650 Schopfheim (DE)
(74) Representative: HOFFMANN - EITLE

(56) References cited:
- DE-A- 4 421 439
- US-A- 4 668 523
- US-A- 4 832 966
- US-A- 5 364 274
- US-A- 5 451 181
- US-A- 5 525 383
- US-A- 5 723 203
- US-A- 6 004 334
- US-A- 6 103 278
- PATENT ABSTRACTS OF JAPAN vol. 013, no. 047 (P-822), 3 February 1989 (1989-02-03) & JP 63 241588 A (DAINIPPON PRINTING CO LTD), 6 October 1988 (1988-10-06)
- DATABASE WPI Section Ch, Week 199505 Derwent Publications Ltd., London, GB; Class A32, AN 1995-031970 XP002168078 & ES 2 062 915 A (GILI PICOY P), 16 December 1994 (1994-12-16)
- DATABASE WPI Section Ch, Week 199947 Derwent Publications Ltd., London, GB; Class A32, AN 1999-551608 XP002168079 & AU 32358 99 A (BRABHAM PROMOTIONS PTY LTD), 26 August 1999 (1999-08-26)

## Description

### Technical Field

The invention relates to a confectionery product, as well as a mold for and a method of manufacturing a confectionery product.

In the field of confectionery products, e.g. made from chocolate, the outer appearance of the product is, apart from the taste of the product, becoming more and more important. In particular, the outer appearance of confectionery products can be used for marketing and promotional purposes so that the outer surfaces of confectionery products are more and more designed to fulfill specific needs in this respect.

### Background Art

There are confectionery products available on the market today that comprise surface portions containing a relief or indentations, which allow an image or other graphic information such as brand names, etc. to be visible on the surface of the product. Furthermore, attempts have been made to manufacture confectionery products, in particular bars or tablets of chocolate consisting of more than one color. For example, portions of the surface or of the confectionery product as a whole could be made of white instead of brown chocolate, so that an image or one or more words can be shown on the surface of the confectionery product. Furthermore, various other methods for printing images on chocolate are known in the art.

### Summary of the Invention

The object underlying the invention is to provide a confectionery product, a mold for as well as method of manufacturing a confectionery product, by means of which images or other graphic information, such as words, in particular brand names, can be depicted on the surface of a confectionery product in a more sophisticated manner attracting the customer.

This object is with regard to the confectionery product as such solved by means of the subject matter of claim 1.

In principle, the invention provides a confectionery product having an image or picture on its surface that is visible when viewed from a particular angle, but which is not visible when viewed from a different angle. Said image or picture can consist of any type of graphical information such as images, symbols or words. As will be detailed below, the confectionery product according to the invention can easily be provided with a second image or the like, which is visible when the product is viewed from the second angle. Thus, two different pictures are visible from one surface area. By means of these two different pictures, interchanging and, thus, moving images can also be displayed.

This inventive principle is realized by means of the fact that the confectionery product according to the invention comprises, on at least one of its surfaces, a first set of surface portions and a second set of surface portions. On the entirety of the surface portions of the first set, a graphic information is formed, which will in the following be referred to as the first graphic information. Furthermore, the surface portions of the first set are arranged alternating with the surface portions of the second set. Finally, the respective surface portions of the first set are arranged at an angle with respect to the adjacent surface portions of the second set. In other words, a - as seen in a cross-section - zigzag structure is essentially formed on at least a portion of at least one of the surfaces of the inventive confectionery product. This structure can, as described in three-dimensional terms, be called a multi- or poly-prismatic structure. The first set of surface portions is formed by those flanks of the zigzag structure, which are facing a first direction. The flanks in between form the second set of surface portions, which are essentially facing or directed to a second direction.

Since the first graphic information is formed on the entirety of the surface portions of the first set, this graphic information is visible from the first direction. Furthermore, when the product is viewed at an angle, which does not deviate excessively from this first direction, the graphic information will be visible. In contrast, when the product is viewed essentially from a second direction, the entirety of the surface portions of the second set is visible, whereas the entirety of the surface portions of the first set is not visible. Consequently, the graphic information which is formed on the surface portions of the first set is not visible. The graphic information on the first and second set of surface portions can be combined with each other so as to display interchanging or even moving images or pictures.

This structure renders the surface of the inventive confectionery product interesting and sophisticated with regard to its outer appearance. The customer will experience that the graphic information is visible from one direction and not visible from other directions. Therefore, the customer's attention tends to be drawn to this nice effect, as the customer will most likely manipulate the product or move the product about so that the graphic information is visible at times and not visible at other times. Thus, the customer will more likely take notice of the graphic information that is depicted on the product. Therefore, the confectionery product according to the invention is particularly useful for promotional products with a visible surface, on which graphic information relating to the brand or manufacturer or any company using the confectionery product for promotional purposes is displayed.

Preferred embodiments of the inventive confectionery product are described in the further claims.

As indicated above, the effect of the invention is enhanced when a second graphic information is formed on the entirety of surface portions of the second set. In this manner, the first graphic information is visible from one direction and the second graphic information is visible from a second direction. Thus, the customer's attention can not only be effectively drawn to the graphic information as such, but also two different or complementary graphics can be displayed on the product. In summary, the surface of the confectionery product is effectively used for displaying graphic information, because two different graphics can be shown on a particular surface area.

With regard to the manner in which the graphic information is formed on the respective surface portions, it is preferred that the first and/or second graphic information is formed by a relief. As indicated in the introduction, it is generally possible that the graphic information on the confectionery product according to the invention is formed by providing portions of the surface portions mentioned above with a differing color. However, the most effective way of causing graphic information to appear on the surface of the confectionery product is to form a relief or indentations on the surface portions which will then be visible to the customer.

Although the surface portions of the first set as well as the surface portions of the second set do not necessarily have to be parallel to each other, it is preferred that all the surface portions of the first set and/or all of the surface portions of the second set are arranged parallel to each other. In this embodiment, the whole area of the surface portions of the respective set can be used to display a portion of the graphic information which is shown on the entirety of surface portions of the respective set.

A mold for manufacturing a confectionery product, which is formed according to the invention, is described in claim 5. In order to manufacture a confectionery product as described above, the inventive mold comprises, on at least one of its inner surfaces, a first set of surface portions and a second set of surface portions. The surface portions of the first set and the surface portions of the second set are arranged alternating with each other and at an angle with respect to each other. In order to form a graphic information on the entirety of surface portions of the first set, the entirety of surface portions of the first set of the inventive mold comprises graphic information formed by means of a relief or indentations. When the confectionery product is manufactured by filling, for example chocolate into the mold, the required graphic information is formed on the entirety of surface portions of the first set by means of the fact that the relief or indentations on the surface portions of the inner surface of the mold lead to corresponding indentations or a relief on the confectionery product, which will then be visible from one direction and not visible from others. Preferred embodiments of the inventive mold essentially correspond to the complementary features of the confectionery product as outlined above.

The inventive method of manufacturing a confectionery product is described in claim 8. In accordance with the principle underlying the invention, a graphic information is formed on the entirety of surface portions of a first set formed alternating with the surface portions of a second set on at least one of the surfaces of the confectionery product. Also with regard to the inventive method, preferred embodiments thereof comprise features which correspond to the features of preferred embodiment of the confectionery product as such.

### Brief Description of the Drawings

Further features and advantages of the subject matter of the invention will become apparent from the following detailed description of a preferred embodiment thereof, which is to be taken in connection with the drawings, in which:
- Fig. 1: shows a top view of the confectionery product according to the invention; and
- Fig. 2: shows a cross-sectional view of the confectionery product.

### Detailed Description of a Preferred Embodiment of the Invention

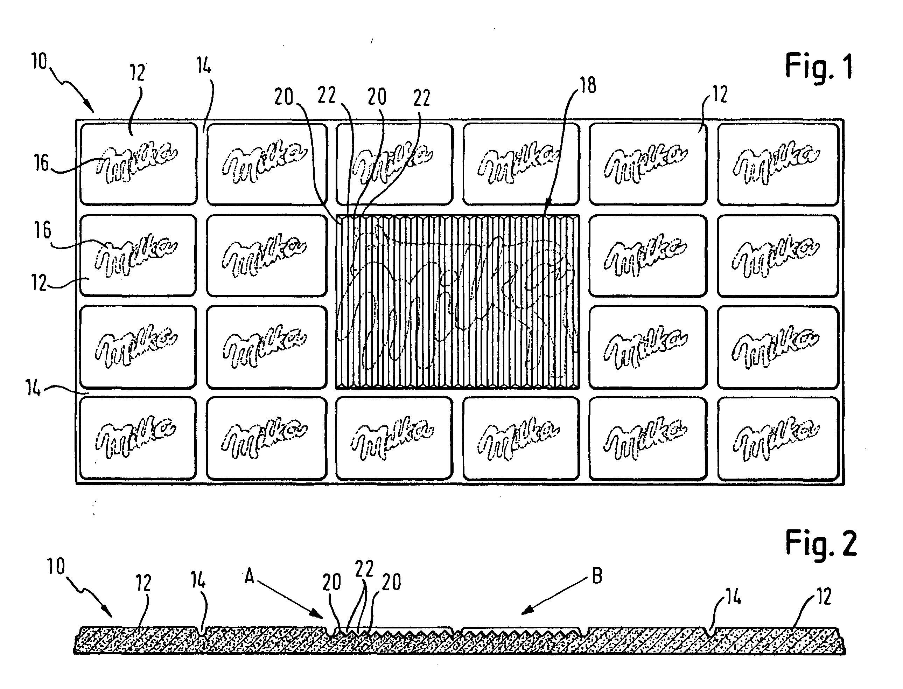

As can be taken from Fig. 1, as a preferred embodiment of the confectionery product according to the invention, a chocolate tablet 10 comprises several portions 12 which are defined by strip-like portions 14 of reduced thickness (see Fig. 2) delimiting the portions 12. By means of the strips 14, a row of portions 12 or single portions 12 can be broken off from the complete tablet 10 in order to consume only a well-defined portion of the complete tablet. Furthermore, in the depicted embodiment, graphic information, which is indicated by 16, is formed on each of the portions 12 by means of indentations defining the depicted word. Due to the light being reflected from the recesses or indentations in a different manner than from the "regular" surface of the portions 12, the graphic information 16 is visible to the customer.

The same effect is used for a central portion 18 of the depicted tablet 10, in which strip-like surface portions 20 of a first set are formed alternating with strip-like surface portions 22 of a second set. On the entirety of the surface portions 20 of the first set, a first graphic information is formed by means of forming appropriate indentations. Furthermore, a second graphic information is formed on the entirety of surface portions 22 of the second set. E.g., a first graphic information could correspond to the graphic information shown on the surrounding portions 12, whereas a second graphic information could consist of an image or any other desired graphic information. As can be seen from Fig. 1, the surface portions 20 of the first set and the surface portions 22 of the second set are arranged alternating with each other.

As can be seen from Fig. 2, adjacent surface portions 20 of the first set and surface portions 22 of the second set are arranged at an angle with regard to each other. According to a preferred embodiment, these surface portions form an angle of approximately 90°. Accordingly, a structure, which appears as a zigzag structure in the cross-section of Fig. 2, is formed in the surface area 18 (see Fig. 1). Furthermore, with regard to a three-dimensional appearance, adjacent surface portions of the first and the second set respectively form ridges extending over the surface area 18. The surface portions 20 of the first set are formed by each left side flank of these ridges according to Fig. 2, and the surface portions 22 of the second set are formed by each right side flank.

Accordingly, the entirety of surface portions 20 of the first set can be seen as if they were arranged immediately next to each other when the product 10 is viewed from a first direction A. This first direction A will essentially be parallel to each of the surface portions 22 of the second set. When the product is viewed from this first direction A, the surface portions 22 of the second set will essentially not be visible at all, as the direction A extends parallel to these surface portions. Accordingly, the first graphic information, which is formed on the entirety of the surface portions 20 of the first set, can be viewed from the direction A, since the surface portions 20 appear adjacent to each other and thus show the first graphic information.

In contrast, when the direction in which the product is viewed excessively deviates from this direction A, the first graphic information cannot be recognized. In particular, as can be seen from Fig. 1, neither the first nor the second graphic information will be visible when the product 10 is viewed in a direction perpendicular to its surface. However, when the product is viewed from a second direction B, which is essentially parallel to the surface portions 20 of the first set, the entirety of surface portions 22 of the second set will appear immediately adjacent each other. Therefore, the second graphic information which is according to the preferred embodiment formed on the surface portions 22 of the second set, can be viewed from the direction B.

## Claims

1. Confectionery product (10) comprising on at least one of its surfaces (18), a first set of surface portions (20), a first graphic information being formed on the entirety of surface portions (20) of the first set, and a second set of surface portions (22), the surface portions (20) of the first set being arranged alternating with the surface portions (22) of the second set, and the surface portions (20) of the first set being arranged at an angle with respect to the surface portions (22) of the second set.

2. Confectionery product according to claim 1, wherein a second graphic information is formed on the entirety of surface portions (22) of the second set.

3. Confectionery product according to claim 1 or 2, wherein the first and/or second graphic information is formed by a relief or indentations.

4. Confectionery product according to one of the preceding claims, wherein
the surface portions (20, 22) of at least one of the first and second set are parallel to each other.

5. A mold for manufacturing a confectionery product (10) comprising on at least one of its inner surfaces a first set of surface portions, a first graphic information in the form of a relief or indentations being formed on the entirety of the surface portions of the first set, and a second set of surface portions, the surface portions of the first set being arranged alternating with the surface portions of the second set, and the surface portions of the first set being arranged at an angle with respect to the surface portions of the second set.

6. A mold according to claim 5, wherein a second graphic information in the form of a relief or indentations is formed on the entirety of surface portions of the second set.

7. A mold according to claim 5 or 6, wherein the surface portions of at least one of the first and the second set are parallel to each other.

8. A method of manufacturing a confectionery product (10) comprising the following steps:
- forming on at least one of the surfaces of the product, a first set of surface portions, and forming a first graphic information on the entirety of the surface portions of the first set,
- forming a second set of surface portions such that the surface portions of the first set are arranged alternating with the surface portions of the second set and at an angle with respect to the surface portions of the second set.

9. A method according to claim 8, wherein
a second graphic information is formed on the entirety of the surface portions of the second set.

10. A method according to claim 8 or 9, wherein
the first and/or second graphic information is formed by a relief or indentation(s).

11. A method according to any of claims 8 to 10, wherein the surface portions of at least one of the first and the second set are formed parallel to each other.

## Patentansprüche

1. Konfekt (10), das auf wenigstens einer seiner Oberflächen (18) eine erste Gruppe von Oberflächeabschnitten (20), eine erste graphische Information, die auf der Gesamtheit der Oberflächenabschnitte (20) der ersten Gruppe ausgebildet ist und eine zweite Gruppe von Oberflächenabschnitten (22) umfasst, wobei die Oberflächenabschnitte (20) der ersten Gruppe zu den Oberflächenabschnitten (22) der zweiten Gruppe abwechselnd angeordnet sind und die Oberflächenabschnitte (20) der ersten Gruppe in einem Winkel in bezug auf die Oberflächenabschnitte (22) der zweiten Gruppe angeordnet sind.

2. Konfekt nach Anspruch 1, **dadurch gekennzeichnet, dass** eine zweite graphische Information auf der Gesamtheit der Oberflächenabschnitte (22) der zweiten Gruppe ausgebildet ist.

3. Konfekt nach Anspruch 1 oder 2, **dadurch gekennzeichnet, dass** die erste und/oder zweite graphische Information durch eine Kontur oder Vertiefungen ausgebildet ist.

4. Konfekt nach einem der vorstehenden Ansprüche, **dadurch gekennzeichnet, dass** die Oberflächenabschnitte (20, 22) aus wenigstens einer der ersten und zweiten Gruppe parallel zueinander sind.

5. Gussform zum Herstellen eines Konfekts (10), die auf wenigstens einer ihrer inneren Oberflächen eine erste Gruppe von Oberflächenabschnitten, eine erste graphische Information in Form einer Kontur oder Vertiefungen, die auf der Gesamtheit der Oberflächenabschnitte der ersten Gruppe ausgebildet sind und eine zweite Gruppe von Oberflächenabschnitten umfasst, wobei die Oberflächenabschnitte der ersten Gruppe zu den Oberflächenabschnitten der zweiten Gruppe abwechselnd angeordnet sind und die Oberflächenabschnitte der ersten Gruppe in bezug auf die Oberflächenabschnitte der zweiten Gruppe in einem Winkel angeordnet sind.

6. Gussform nach Anspruch 5, **dadurch gekennzeichnet, dass** eine zweite graphische Information in der Form einer Kontur oder Vertiefungen auf der Gesamtheit der Oberflächenabschnitte der zweiten Gruppe ausgebildet ist.

7. Gussform nach Anspruch 5 oder 6, **dadurch gekennzeichnet, dass** die Oberflächenabschnitte aus wenigstens einer der ersten und zweiten Gruppe parallel zueinander sind.

8. Verfahren zum Herstellen eines Konfekts (10), umfassend die folgenden Schritte:
Bilden einer ersten Gruppe von Oberflächenabschnitten auf wenigstens einer der Oberflächen des Produkts und Ausbilden einer ersten graphischen Information auf der Gesamtheit der Oberflächenabschnitte der ersten Gruppe,
Bilden einer zweiten Gruppe von Oberflächenabschnitten, so dass die Oberflächenabschnitte der ersten Gruppe abwechselnd zu den Oberflächenabschnitten der zweiten Gruppe und in bezug auf die Oberflächenabschnitte der zweiten Gruppe in einem Winkel angeordnet sind.

9. Verfahren nach Anspruch 8, **dadurch gekennzeichnet, dass** eine zweite graphische Information auf der Gesamtheit der Oberflächenabschnitte der zweiten Gruppe ausgebildet wird.

10. Verfahren nach Anspruch 8 oder 9, **dadurch gekennzeichnet, dass** die erste und/oder zweite graphische Information durch eine Kontur oder Vertiefung(en) ausgebildet ist.

11. Verfahren nach einem der Ansprüche 8 bis 10, **dadurch gekennzeichnet, dass** die Oberflächenabschnitte aus wenigstens einer der ersten und zweiten Gruppe parallel zueinander ausgebildet wird.

## Revendications

1. Produit de confiserie (10) comprenant, sur au moins l'une de ses surfaces (18) un premier ensemble de parties de surface (20), une première information graphique étant formée sur la totalité des parties de surfaces (20) du premier ensemble, et un second ensemble de partie de surface (22), les parties de surface (20) du premier ensemble étant disposées en alternance avec les parties de surface (22) du second ensemble et les parties de surface (20) du premier ensemble étant disposées de manière à former un angle avec les parties de surface (22) du second ensemble.

2. Produit de confiserie, selon la revendication 1, dans lequel une seconde information graphique est formée sur la totalité des parties de surface (22) du second ensemble.

3. Produit de confiserie selon la revendication 1 ou 2, dans lequel la première et/ou la seconde information graphique est formée par un relief ou des indentations.

4. Produit de confiserie selon l'une des revendications précédentes, dans lequel les parties de surface (20, 22) d'au moins l'un des premier et second ensembles sont parallèles entre elles.

5. Moule conçu pour fabriquer un produit de confiserie (10) comprenant sur au moins l'une de ses surfaces internes un premier ensemble de parties de surface, une première information graphique sous la forme d'un relief ou d'indentation, étant formée sur la totalité des parties de surface du premier ensemble, et un second ensemble de parties de surface, les parties de surface du premier ensemble étant disposées en alternance avec les parties de surface du second ensemble, et les parties de surface du premier ensemble étant disposées de manière à former un angle avec les parties de surface du second ensemble.

6. Moule selon la revendication 5, dans lequel une seconde information graphique sous la forme d'un relief ou d'indentations est formée sur la totalité des parties de surface du second ensemble.

7. Moule selon la revendication 5 ou 6 dans lequel les parties de surface d'au moins l'un des premier et second ensembles sont parallèles entre elles.

8. Procédé de fabrication d'un produit de confiserie (10) comprenant les étapes suivantes, consistant à :
- former sur au moins l'une des surfaces du produit, un premier ensemble de parties de surface, et former une première information graphique sur la totalité des parties de surface du premier ensemble,
- former un second ensemble de parties de surface de telle manière que les parties de surface du premier ensemble soient disposées en alternance avec les parties de surface du second ensemble et en formant un angle avec les parties de surface du second ensemble.

9. Procédé selon la revendication 8, dans lequel une seconde information graphique est formée sur la totalité des parties de surface du second ensemble.

10. Procédé selon la revendication 8 ou 9, dans lequel la première et/ou seconde information graphique est formée par un relief ou une (des) indentation (s).

11. Procédé selon l'une quelconque des revendications 8 à 10, dans lequel les parties de surface d'au moins un des premier et second ensembles sont formés de manière parallèle entre elles.
